# EUROPÄISCHE PATENTSCHRIFT

(11) **EP 2 232 686 B1**
(45) Veröffentlichungstag und Bekanntmachung des Hinweises auf die Patenterteilung: **20.07.2011**
(21) Anmeldenummer: 08701587.1
(22) Anmeldetag: 18.01.2008
(51) Int. Cl.: H02M 3/156, H05B 33/08

(54) **BUCK-KONVERTER ZUM BEREITSTELLEN EINES STROMS FÜR MINDESTENS EINE LED**
BUCK CONVERTER FOR MAKING POWER AVAILABLE TO AT LEAST ONE LED
CONVERTISSEUR ABAISSEUR DESTINÉ À METTRE UN COURANT À DISPOSITION D'AU MOINS UNE DEL

(43) Veröffentlichungstag der Anmeldung: 29.09.2010
(73) Patentinhaber: OSRAM Gesellschaft mit beschränkter Haftung, 81543 München (DE)
(72) Erfinder: RUDOLPH, Bernd, 85659 Forstern (DE)
(86) Internationale Anmeldenummer: PCT/EP2008/050581
(87) Internationale Veröffentlichungsnummer: WO 2009/089919

(56) Entgegenhaltungen:
- EP-A- 1 868 284
- US-A- 3 500 127
- US-A- 4 823 023
- US-A1- 2003 085 749

## Beschreibung

### Technisches Gebiet

Die vorliegende Erfindung betrifft einen Buck-Konverter zum Bereitstellen eines Stroms für mindestens eine LED mit einem Eingang mit einem ersten und einem zweiten Eingangsanschluss zum Anschließen einer Gleichspannungsquelle, einem Ausgang mit einem ersten und einem zweiten Ausgangsanschluss zum Anschließen der mindestens einen LED, und einer Buckdiode, einer Buckdrossel und einem Buck-Hauptschalter, der eine Steuerelektrode, eine Arbeitselektrode und eine Bezugselektrode aufweist.

### Stand der Technik

Mit dem Vordringen von LEDs in weite Bereiche der Allgemeinbeleuchtung ergibt sich ein großer Bedarf an einfachen und kostengünstigen Stromversorgungsschaltungen für diese Bauteile. Eine für Netzanwendungen zum Betrieb von LEDs bekannte Wandlerschaltung ist der so genannte Sperrwandler, für den auch der Name Flyback gebräuchlich ist. Weiterhin gibt es mittlerweile eine Vielzahl von insbesondere integrierten Schaltungen für Buck- oder Boost-Konverter, zum Beispiel das Steuer-IC MXHV9910 von der Firma Micronix. Der Nachteil an diesen Realisierungen besteht darin, dass sie alle einen recht erheblichen Aufwand benötigen und auf die Verwendung teurer Bauteile angewiesen sind. So muss der Schalter eines Sperrwandlers bei europäischer Netzspannung eine Spannungsfestigkeit von mindestens 700 V aufweisen. Für den Einsatz in Massenprodukten übersteigen die dadurch entstehenden Kosten häufig das vorgegebenen Budget.

### Darstellung der Erfindung

Die Aufgabe der vorliegenden Erfindung besteht deshalb darin, einen eingangs genannten Buck-Konverter derart weiterzubilden, dass er äußerst preisgünstig realisiert werden kann.

Diese Aufgabe wird gelöst durch einen Buck-Konverter mit den Merkmalen von Patentanspruch 1.

Der vorliegenden Erfindung liegt die Erkenntnis zugrunde, dass sehr preisgünstige Bipolartransistoren, wie sie beispielsweise der aus dem Videobereich bekannte Typ MPSA42 darstellen, bei den für eine Leistungs-LED notwendigen Strömen zum einen nur noch eine geringe Stromverstärkung haben, zum anderen aber zu einem definierten Zeitpunkt abgeschaltet werden müssen, damit sich für die LED ebenfalls ein definierter Strom einstellt.

Die Erfindung basiert nun weiterhin darauf, dass zur Reduktion der Belastung des Schalters die Buckdiode und der Buck-Hauptschalter seriell zwischen den ersten und den zweiten Eingangsanschluss gekoppelt sind, wobei der Verbindungspunkt zwischen der Buckdiode und dem Buck-Hauptschalter mit dem zweiten Ausgangsanschluss gekoppelt ist. Der erste Anschluss der Buckdrossel ist mit dem ersten Eingangsanschluss und der zweite Anschluss der Buckdrossel mit dem ersten Ausgangsanschluss gekoppelt. Das Problem der geringen Stromverstärkung im Bereich der Ströme, die zum Betrieb von Leistungs-LEDs nötig sind, wird erfindungsgemäß dadurch gelöst, dass eine Maßnahme getroffen wurde, um ausreichend Basisstrom für den Buck-Hauptschalter bereitzustellen. Dazu umfasst der Buck-Konverter weiterhin eine erste mit der Buckdrossel gekoppelte Hilfswicklung, die einen ersten Anschluss aufweist, der mit dem zweiten Eingangsanschluss gekoppelt ist, und einen zweiten Anschluss, der mit der Steuerelektrode des Buck-Hauptschalters gekoppelt ist, wobei die erste Hilfswicklung derart mit der Buckdrossel gekoppelt ist, dass bei einem Stromfluss durch den Buck-Hauptschalter durch die erste Hilfswicklung ein Strom an die Steuerelektrode des Buck-Hauptschalters bereitgestellt wird.

Diese Maßnahmen ermöglichen die Realisierung eines äußerst einfachen und kostengünstigen Aufbaus eines Buck-Konverters. Sie ermöglichen überdies einen Betrieb im Critical Conduction Mode, bei dem praktisch nur Abschaltverluste für den Buck-Hauptschalter auftreten.

Bei einer bevorzugten Ausführungsform umfasst der Buck-Konverter weiterhin einen Strommesswiderstand, der seriell zum Buck-Hauptschalter, insbesondere zwischen den von der Buckdiode und dem Buck-Hauptschalter definierten Verbindungspunkt und den zweiten Eingangsanschluss, gekoppelt ist sowie einen ersten Hilfsschalter zum Ausschalten des Buck-Hauptschalters, wobei der erste Hilfsschalter eine Steuerelektrode, eine Arbeitselektrode und eine Bezugselektrode aufweist, wobei die Bezugselektrode des ersten Hilfsschalters mit dem zweiten Eingangsanschluss gekoppelt ist und wobei die Steuerelektrode des ersten Hilfsschalters mit dem Strommesswiderstand gekoppelt ist. Durch diese Anordnung wird bei Erreichen eines vorgebbaren Maximalstroms durch den Buck-Hauptschalter am Strommesswiderstand eine Spannung erzeugt, die zum Einschalten des ersten Hilfsschalters führt, wobei das Einschalten des ersten Hilfsschalters den Buck-Hauptschalter ausschaltet.

Bevorzugt umfasst der Buck-Konverter weiterhin ein Zeitglied, das zwischen den Strommesswiderstand und die Steuerelektrode des ersten Hilfsschalters gekoppelt ist. Dadurch kann sichergestellt werden, dass der erste Hilfsschalter eingeschaltet bleibt, obwohl der an seiner Steuerelektrode bereitgestellte Strom aufgrund des Ausschaltens des Buck-Hauptschalters schon sinkt. Eine bevorzugte Zeitkonstante liegt beispielsweise in der Größenordnung zwischen 0,2 und 10 µs, bevorzugt 1 µs.

Weiterhin bevorzugt ist zwischen den zweiten Anschluss der ersten Hilfswicklung und der Steuerelektrode des Buck-Hauptschalters ein erster ohmscher Widerstand gekoppelt. Weiterhin bevorzugt ist dabei der Verbindungspunkt zwischen dem ersten ohmschen Widerstand und der Steuerelektrode des Buck-Hauptschalters über einen zweiten ohmschen Widerstand mit dem zweiten Eingangsanschluss gekoppelt. Damit wird die Steuerstrecke des Buck-Hauptschalters relativ niederohmig abgeschlossen und ist damit gegenüber eingekoppelten Störungen unempfindlich.

Weiterhin bevorzugt ist die Steuerelektrode des Buck-Hauptschalters mit der Arbeitselektrode des ersten Hilfsschalters gekoppelt.

Bei einer bevorzugten Weiterbildung kann vorgesehen sein, dass der Buck-Konverter weiterhin einen zweiten Hilfsschalter zum Starten des Buck-Konverters umfasst, wobei der zweite Hilfsschalter eine Steuerelektrode, eine Arbeitselektrode und eine Bezugselektrode aufweist, wobei die Bezugselektrode des zweiten Hilfsschalters mit dem ersten Eingangsanschluss gekoppelt ist, wobei die Steuerelektrode des zweiten Hilfsschalters über einen ohmschen Widerstand mit dem zweiten Eingangsanschluss gekoppelt ist. Durch diese Maßnahme wird sichergestellt, dass der zweite Hilfsschalter einschaltet, sobald eine Gleichspannungsquelle zwischen dem ersten und dem zweiten Eingangsanschluss angeschlossen wird.

Bevorzugt ist die Arbeitselektrode des zweiten Hilfsschalters über einen ohmschen Widerstand mit der Arbeitselektrode des ersten Hilfsschalters gekoppelt. Sobald der zweite Hilfsschalter eingeschaltet ist, wird dann über diesen ohmschen Widerstand ein Strom an die Steuerelektrode des Buck-Hauptschalters bereitgestellt, so dass dieser ebenfalls einschaltet. In die Steuerelektrode des Buck-Hauptschalters fließen demnach der durch die erste Hilfswicklung erzeugte Strom sowie der über den eingeschalteten zweiten Hilfsschalter fließende Strom.

Bevorzugt umfasst der Buck-Konverter weiterhin eine zweite, mit der Buckdrossel gekoppelte Hilfswicklung, die einen ersten Anschluss aufweist, der mit dem ersten Eingangsanschluss gekoppelt ist, und einen zweiten Anschluss, der mit der Steuerelektrode des zweiten Hilfsschalters gekoppelt ist. Bevorzugt ist dabei zwischen den zweiten Anschluss der zweiten Hilfswicklung und der Steuerelektrode des zweiten Hilfsschalters ein ohmscher Widerstand gekoppelt, vorzugsweise die Serienschaltung eines ohmschen Widerstands und einer Diode. Dabei ist die zweite Hilfswicklung insbesondere derart mit der Buckdrossel gekoppelt, dass während der Sperrphase des Buck-Hauptschalters bzw. der Entmagnetisierungsphase der Buckdrossel ein Strom an die Steuerelektrode des zweiten Hilfsschalters derart bereitgestellt wird, dass der zweite Hilfsschalter gesperrt wird. Dadurch kann ein Stromfluss durch den ohmschen Widerstand, der die Arbeitselektrode des zweiten Hilfsschalters mit der Arbeitselektrode des ersten Hilfsschalters koppelt, verhindert werden, so dass in diesem ohmschen Widerstand nur in den kurzen Einschaltphasen des Buck-Hauptschalters Verlustleistung entsteht und dieser in den langen Ausschaltphasen des Buck-Hauptschalters quasi verlustfrei betrieben wird.

Zur Reduktion der Welligkeit (Rippel) des an die mindestens eine LED bereitgestellten Stroms ist weiterhin bevorzugt zwischen den ersten und den zweiten Ausgangsanschluss mindestens ein Kondensator gekoppelt.

Weitere bevorzugte Ausführungsformen ergeben sich aus den Unteransprüchen.

### Kurze Beschreibung der Zeichnung(en)

Im Nachfolgenden wird nunmehr ein Ausführungsbeispiel eines erfindungsgemäßen Buck-Konverters unter Bezugnahme auf die beigefügten Zeichnungen näher beschrieben. Es zeigen:
- Fig. 1: in schematischer Darstellung ein Ausführungsbei- spiel eines erfindungsgemäßen Buck-Konverters;
- Fig. 2: den zeitlichen Verlauf der Kollektor-Emitter- Spannung am Buck-Hauptschalter sowie des an die mindestens eine LED bereitgestellten Stroms I_{LED} in einer ersten zeitlichen Auflösung; und
- Fig. 3: den zeitlichen Verlauf der Kollektor-Emitter- Spannung am Buck-Hauptschalter sowie des an die mindestens eine LED bereitgestellten Stroms I_{LED} in einer zweiten zeitlichen Auflösung.

### Bevorzugte Ausführung der Erfindung

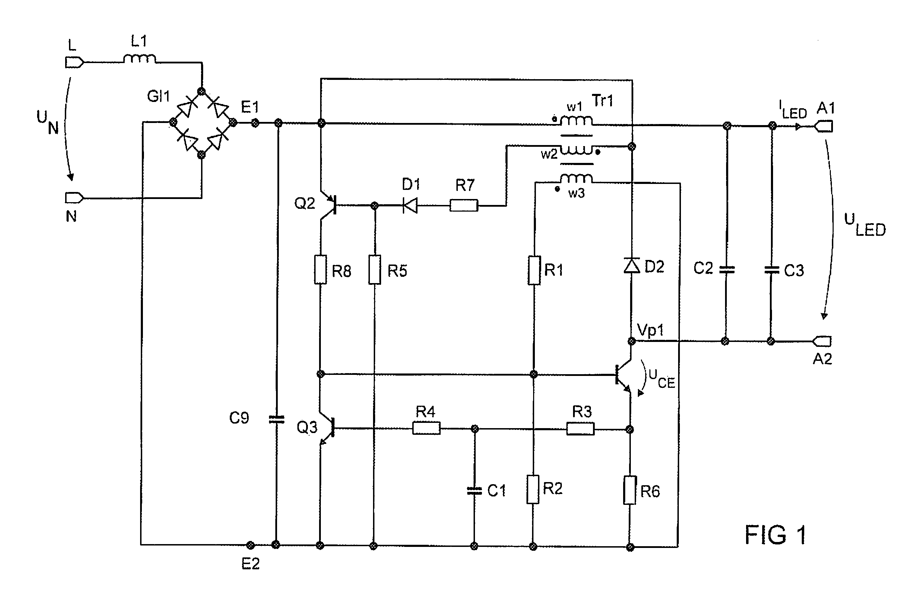

Fig. 1 zeigt in schematischer Darstellung ein Ausführungsbeispiel eines erfindungsgemäßen Buck-Konverters. Dieser weist einen ersten E1 und einen zweiten Eingangsanschluss E2 auf, die über einen Gleichrichter GL1 mit Netzanschlüssen L, N verbunden sind. Eine zwischen dem Netzanschluss L und dem Gleichrichter GL1 angeordnete Induktivität L1 dient der Einschaltstrombegrenzung und der Funkentstörung. Zur Pufferung der gleichgerichteten Netzspannung ist ein Kondensator C9 vorgesehen. Zwischen die Eingangsanschlüsse E1 und E2 ist in üblicher Weise eine Serienschaltung einer Buckdiode D2 sowie eines Buck-Hauptschalters Q1 gekoppelt. Eine Buckdrossel ist zwischen den ersten Eingangsanschluss E1 und einen ersten Ausgangsanschluss A1 gekoppelt, wobei vorliegend die Buckdrossel als erste Wicklung w1 eines Transformators TR1 ausgeführt ist, der überdies eine erste w2 und eine zweite w3 Hilfswicklung trägt. Der zwischen der Buckdiode D2 und dem Buck-Hauptschalter Q1 angeordnete Verbindungspunkt VP1 ist mit dem zweiten Ausgangsanschluss A2 des Buck-Konverters gekoppelt. Zwischen die Ausgangsanschlüsse A1, A2 sind zwei Kondensatoren C2, C3 gekoppelt.

Zwischen den Emitter des Buck-Hauptschalters Q1 und den zweiten Eingangsanschluss E2 ist als Shunt ein ohmscher Widerstand R6 angeordnet. Die an diesem Widerstand R6 abfallende Spannung wird über ein Zeitglied, das den ohmschen Widerstand R3 sowie den Kondensator C1 umfasst, über einen ohmschen Widerstand R4 an die Basis eines ersten Hilfsschalters Q3 geführt, da der Strom durch den Buck-Hauptschalter Q1 nach dessen Ausschalten in ungefähr 200 bis 300 ns auf Null sinkt. Durch dieses Zeitglied kann sichergestellt werden, dass der erste Hilfsschalter Q3 länger eingeschaltet bleibt, als dies bei einer direkten Kopplung, d.h. ohne Zwischenschaltung eines Zeitglieds, der am Widerstand R6 abfallenden Spannung an die Basis des ersten Hilfsschalters Q3 der Fall wäre.

Die Steuerelektrode des Buck-Hauptschalters Q1 ist erstens über einen Widerstand R1 mit der Hilfswicklung w3 gekoppelt, zweitens mit der Arbeitselektrode des Hilfsschalters Q3. Überdies ist die Steuerelektrode des Buck-Hauptschalters Q1 drittens über einen ohmschen Widerstand R2 mit dem zweiten Eingangsanschluss E2 gekoppelt. Ein weiterer Hilfsschalter Q2 ist mit seiner Bezugselektrode mit dem ersten Eingangsanschluss E1 gekoppelt und mit seiner Arbeitselektrode über einen ohmschen Widerstand R8 mit der Arbeitselektrode des Hilfsschalters Q3. Die Steuerelektrode des Hilfsschalters Q2 ist einerseits über einen ohmschen Widerstand R5 mit dem zweiten Eingangsanschluss E2 gekoppelt, andererseits über die Serienschaltung einer Diode D1 und eines ohmschen Widerstands R7 mit der Hilfswicklung w2. Die Diode D1 wirkt hier als Anlaufdiode bei zu kleiner Netzspannung, d. h. der Schalter Q2 wird erst eingeschaltet ab einer Netzspannung von 160 bis 170 V.

Während die Hilfswicklung w3 gleichsinnig mit der Wicklung w1 gewickelt ist, ist der Wicklungssinn der Wicklung w2 zum Wicklungssinn der Wicklung w1 gegensinnig.

Zur Funktionsweise: Nach dem Anlegen einer Netzspannung fließt ein Strom über den Eingangsanschluss E2, die Hilfswicklung w2, den ohmschen Widerstand R7, die Diode D1 und den ohmschen Widerstand R5 und führt zum Einschalten des Hilfstransistors Q2. Dadurch wird ein Basisstrom an die Basis des Buck-Hauptschalters Q1 bereitgestellt, was zum Einschalten des Buck-Hauptschalters Q1 führt. Dabei ist durch geeignete Dimensionierung des Transformators TR1, insbesondere geeignete Auslegung der Wicklung w3, sichergestellt, dass der Buck-Hauptschalter Q1 selbst bei hohen, an die mindestens eine LED bereitgestellten Strömen mit einem ausreichenden Basisstrom versorgt wird. Durch die Hilfswicklung w3 wird genau dann ein Basisstrom für den Buck-Hauptschalter Q1 zur Verfügung gestellt, wenn dieser benötigt wird, und zwar wenn der Buck-Hauptschalter Q1 eingeschaltet ist. Erzeugt der Emitterstrom des Buck-Hauptschalters einen Spannungsabfall am Shunt R6, der ausreicht, den Hilfsschalter Q3 einzuschalten, fließt der vom Hilfsschalter Q2 bereitgestellte Strom nicht mehr an die Steuerelektrode des Buck-Hauptschalters Q1, sondern über den Hilfsschalter Q3 zum Eingangsanschluss E2. Dadurch wird der Buck-Hauptschalter Q1 abgeschaltet.

Im Gegensatz zu einem Sperrwandler wird vorliegend der Buck-Hauptschalter Q1 maximal mit der zwischen den Eingangsanschlüssen E1, E2 anliegenden Spannung belastet. Die Schaltung ist üblicherweise so dimensioniert, dass die Ausschaltzeit t_{off} ungefähr das 20-fache der Anschaltzeit tₒₙ beträgt. In einem bevorzugten Ausführungsbeispiel beträgt die Ausschaltzeit t_{off} ca. 40 µs und die Anschaltzeit tₒₙ entsprechend 2 µs.

Durch die Rückkopplungswicklungen w2 und w3 wird demnach sichergestellt, dass der Buck-Hauptschalter Q1 und der Hilfsschalter Q2 sicher gesperrt sind, bis die Buckdrossel TR1, w1 vollständig entmagnetisiert ist. Dadurch wird der Buck-Hauptschalter Q1 im Critical Conduction Mode (Transition Mode) betrieben, so dass er in der nächsten Periode verlustarm einschalten kann, d. h. der den Buck-Hauptschalter Q1 durchfließende Strom ist zum Einschaltzeitpunkt nahezu Null. Die Frequenz des dreieckförmigen Stroms durch die Buckdrossel TR1, w1 wird durch die zwischen den Anschlüssen anliegende Eingangsnetzspannung U_{N}, die am Ausgang anliegende LED-Spannung U_{LED}, die Induktivität der Buckdrossel TR1, w1 und den Grenzwert für den maximalen LED-Strom I_{LED} festgelegt.

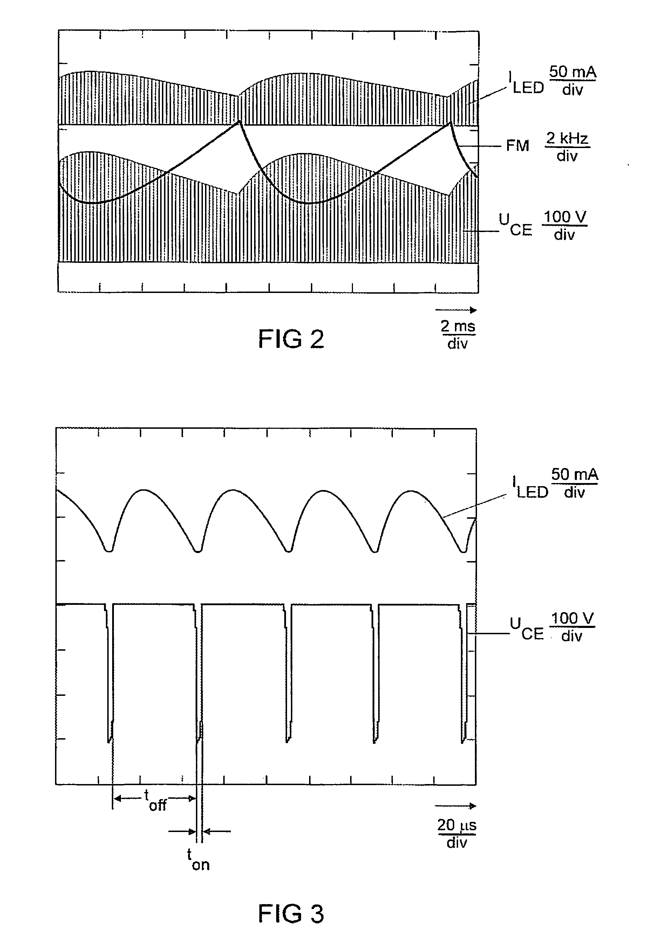

Fig. 2 zeigt für ein Ausführungsbeispiel, das mit den in Fig. 1 angegebenen Dimensionierungen realisiert wurde, den zeitlichen Verlauf der Hüllkurve für den Strom I_{LED}, die Kollektor-Emitter-Spannung U_{CE} des Buck-Hauptschalters Q1 sowie die Frequenzmodulation. Die minimale Frequenz beträgt 23,12 kHz, die maximale Frequenz 28,16 kHz. Trotz dessen, dass der Buck-Hauptschalter Q1 im Critical Conduction Mode betrieben wird, sinkt der Strom I_{LED} aufgrund der Wirkung der Kondensatoren C2 und C3 nie auf Null. Sein Minimum beträgt vorliegend ca. 60 mA, sein Maximum 130 mA.

Während die Aufzeichnung von Fig. 2 mit einer Auflösung von 2 ms pro Zeiteinheit (= Kästchen) gemacht wurde, beträgt die Auflösung in Fig. 3 20 µs pro Zeiteinheit. Sie zeigt den zeitlichen Verlauf des Stroms I_{LED} und der Kollektor-Emitter-Spannung U_{ce} des Buck-Hauptschalters Q1. Wie an dem zeitlichen Verlauf der Spannung U_{ce} gut zu erkennen ist, beträgt die Einschaltzeit tₒₙ des Buck-Hauptschalters Q1 etwa 2 µs, während die Ausschaltzeit t_{off} ca. 38 µs beträgt. Die verschliffene Dreieckform des zeitlichen Verlaufs des Stroms I_{LED} ergibt sich aufgrund der Wirkung der Kondensatoren C2 und C3.

## Patentansprüche

1. Buck-Konverter zum Bereitstellen eines Stroms für mindestens eine LED mit
- einem Eingang mit einem ersten (E1) und einem zweiten Eingangsanschluss (E2) zum Anschließen einer Gleichspannungsquelle;
- einem Ausgang mit einem ersten (A1) und einem zweiten Ausgangsanschluss (A2) zum Anschließen der mindestens einen LED; und
- einer Buckdiode (D2), einer Buckdrossel (TR1, w1) und einem Buck-Hauptschalter (Q1), der eine Steuerelektrode, eine Arbeitselektrode und eine Bezugselektrode aufweist;
wobei die Buckdiode (D2) und der Buck-Hauptschalter (Q1) seriell zwischen den ersten (E1) und den zweiten Eingangsanschluss (E2) gekoppelt sind;
wobei der erste Anschluss der Buckdrossel (TR1, w1) mit dem ersten Eingangsanschluss (E1) gekoppelt ist;
wobei der Buck-Konverter weiterhin umfasst:
eine erste mit der Buckdrossel (TR1, w1) gekoppelte Hilfswicklung (TR1, w3), die einen ersten Anschluss aufweist, der mit dem zweiten Eingangsanschluss (E2) gekoppelt ist, und einen zweiten Anschluss, der mit der Steuerelektrode des Buck-Hauptschalters (Q1) gekoppelt ist, wobei die erste Hilfswicklung (TR1, w3) derart mit der Buckdrossel (TR1, w1) gekoppelt ist, dass bei einem Stromfluss durch den Buck-Hauptschalter (Q1) durch die erste Hilfswicklung (TR1, w3) ein Strom an die Steuerelektrode des Buck-Hauptschalters (Q1) bereitgestellt wird ,
**dadurch gekennzeichnet**, der Verbindungspunkt (VP1) zwischen der Buckdiode (D2) und dem Buck-Hauptschalter (Q1) mit dem zweiten Ausgangsanschluss (A2) gekoppelt ist;
der zweite Anschluss der Buckdrossel (TR1, w1) mit dem ersten Ausgangsanschluss (A1) gekoppelt ist.

2. Buck-Konverter nach Anspruch 1,
**dadurch gekennzeichnet,**
**dass** der Buck-Konverter weiterhin umfasst:
einen Strommesswiderstand (R6), der seriell zum Buck-Hauptschalter (Q1), insbesondere zwischen den von der Buckdiode (D2) und dem Buck-Hauptschalter (Q1) definierten Verbindungspunkt (VP1) und den zweiten Eingangsanschluss (E2), gekoppelt ist, sowie einen ersten Hilfsschalter (Q3) zum Ausschalten des Buck-Hauptschalters (Q1), wobei der erste Hilfsschalter (Q3) eine Steuerelektrode, eine Arbeitselektrode und eine Bezugselektrode aufweist, wobei die Bezugselektrode des ersten Hilfsschalters (Q3) mit dem zweiten Eingangsanschluss (E2) gekoppelt ist und wobei die Steuerelektrode des ersten Hilfsschalters (Q3) mit dem Strommesswiderstand (R6) gekoppelt ist.

3. Buck-Konverter nach Anspruch 2,
**dadurch gekennzeichnet,**
**dass** der Buck-Konverter weiterhin ein Zeitglied (C1, R3) umfasst, das zwischen den Strommesswiderstand und die Steuerelektrode des ersten Hilfsschalters (Q3) gekoppelt ist.

4. Buck-Konverter nach einem der vorhergehenden Ansprüche,
**dadurch gekennzeichnet,**
**dass** zwischen den zweiten Anschluss der ersten Hilfswicklung (TR1, w3) und der Steuerelektrode des Buck-Hauptschalters (Q1) ein erster ohmscher Widerstand (R1) gekoppelt ist.

5. Buck-Konverter nach Anspruch 4,
**dadurch gekennzeichnet,**
**dass** der Verbindungspunkt zwischen dem ersten ohmschen Widerstand (R1) und der Steuerelektrode des Buck-Hauptschalters (Q1) über einen zweiten ohmschen Widerstand (R2) mit dem zweiten Eingangsanschluss (E2) gekoppelt ist.

6. Buck-Konverter nach einem der Ansprüche 2 bis 5,
**dadurch gekennzeichnet,**
**dass** die Steuerelektrode des Buck-Hauptschalters (Q1) mit der Arbeitselektrode des ersten Hilfsschalters (Q3) gekoppelt ist.

7. Buck-Konverter nach einem der vorhergehenden Ansprüche,
**dadurch gekennzeichnet,**
**dass** der Buck-Konverter weiterhin umfasst:
einen zweiten Hilfsschalter (Q2) zum Starten des Buck-Konverters, wobei der zweite Hilfsschalter (Q2) eine Steuerelektrode, eine Arbeitselektrode und eine Bezugselektrode aufweist, wobei die Bezugselektrode des zweiten Hilfsschalters (Q2) mit dem ersten Eingangsanschluss (E1) gekoppelt ist, wobei die Steuerelektrode des zweiten Hilfsschalters (Q2) über einen ohmschen Widerstand (R5) mit dem zweiten Eingangsanschluss (E2) gekoppelt ist.

8. Buck-Konverter nach Anspruch 7,
**dadurch gekennzeichnet,**
**dass** die Arbeitselektrode des zweiten Hilfsschalters (Q2) über einen ohmschen Widerstand (R8) mit der Arbeitselektrode des ersten Hilfsschalters (Q3) gekoppelt ist.

9. Buck-Konverter nach einem der vorhergehenden Ansprüche,
**dadurch gekennzeichnet,**
**dass** der Buck-Konverter weiterhin umfasst:
eine zweite mit der Buckdrossel gekoppelte Hilfswicklung (TR1, w2), die einen ersten Anschluss aufweist, der mit dem ersten Eingangsanschluss (E1) gekoppelt ist, und einen zweiten Anschluss, der mit der Steuerelektrode des zweiten Hilfsschalters (Q2) gekoppelt ist.

10. Buck-Konverter nach Anspruch 9,
**dadurch gekennzeichnet,**
**dass** zwischen den zweiten Anschluss der zweiten Hilfswicklung (TR1, w2) und der Steuerelektrode des zweiten Hilfsschalters (Q2) ein ohmscher Widerstand (R7) gekoppelt ist, vorzugsweise die Serienschaltung eines ohmschen Widerstands (R7) und einer Diode (D1).

11. Buck-Konverter nach einem Ansprüche 9 oder 10,
**dadurch gekennzeichnet,**
**dass** die zweite Hilfswicklung (TR1, w2) derart mit der Buckdrossel (TR1, w1) gekoppelt ist, dass während der Entmagnetisierungsphase der Buckdrossel (TR1, w1) ein Strom an die Steuerelektrode des zweiten Hilfsschalters (Q2) derart bereitgestellt wird, dass der zweite Hilfsschalter (Q2) gesperrt wird.

12. Buck-Konverter nach einem der vorhergehenden Ansprüche,
**dadurch gekennzeichnet,**
**dass** zwischen den ersten (A1) und den zweiten Ausgangsanschluss (A2) mindestens ein Kondensator (C2; C3) gekoppelt ist.

## Claims

1. Buck converter for providing a current for at least one LED having
- an input having a first (E1) and a second (E2) input connection for connection of a DC voltage source;
- an output having a first (A1) and a second (A2) output connection for connection of the at least one LED; and
- a Buck diode (D2), a Buck inductor (TR1, w1) and a Buck main switch (Q1) which has a control electrode, a working electrode and a reference electrode;
wherein the Buck diode (D2) and the Buck main switch (Q1) are coupled in series between the first (E1) and the second input connection (E2);
wherein the first connection of the Buck inductor (TR1, w1) is coupled to the first input connection (E1); wherein the Buck converter furthermore comprises:
a first auxiliary winding (TR1, w3) which is coupled to the Buck inductor (TR1, w1) and has a first connection which is coupled to the second input connection (E2) and a second connection which is coupled to the control electrode of the Buck main switch (Q1), wherein the first auxiliary winding (TR1, w3) is coupled to the Buck inductor (TR1, w1) such that, when current is flowing through the Buck main switch (Q1), a current is provided through the first auxiliary winding (TR1, w3) to the control electrode of the Buck main switch (Q1) **characterized in that**
the connecting point (VP1) between the Buck diode (D2) and the Buck main switch (Q1) is coupled to the second output connection (A2);
the second connection of the Buck inductor (TR1, w1) is coupled to the first output connection (A1).

2. Buck converter according to Claim 1,
**characterized**
**in that** the Buck converter furthermore comprises:
a current measurement resistor (R6) which is coupled in series with the Buck main switch (Q1), in particular between the connecting point (VP1) defined by the Buck diode (D2) and the Buck main switch (Q1) and the second input connection (E2), and
a first auxiliary switch (Q3) for switching off the buck main switch (Q1), wherein the first auxiliary switch (Q3) has a control electrode, a working electrode and a reference electrode, wherein the reference electrode of the first auxiliary switch (Q3) is coupled to the second input connection (E2) and wherein the control electrode of the first auxiliary switch (Q3) is coupled to the current measurement resistor (R6).

3. Buck converter according to Claim 2,
**characterized**
**in that** the Buck converter furthermore comprises a timing element (C1, R3) which is coupled between the current measurement resistor and the control electrode of the first auxiliary switch (Q3).

4. Buck converter according to one of the preceding claims,
**characterized**
**in that** a first non-reactive resistor (R1) is coupled between the second connection of the first auxiliary winding (TR1, w3) and the control electrode of the Buck main switch (Q1) .

5. Buck converter according to Claim 4,
**characterized**
**in that** the connection point between the first non-reactive resistor (R1) and the control electrode of the Buck main switch (Q1) is coupled via a second non-reactive resistor (R2) to the second input connection (E2).

6. Buck converter according to one of Claims 2 to 5,
**characterized**
**in that** the control electrode of the Buck main switch (Q1) is coupled to the working electrode of the first main switch (Q3).

7. Buck converter according to one of the preceding claims,
**characterized**
**in that** the Buck converter furthermore comprises:
a second auxiliary switch (Q2) for starting the Buck converter, wherein the second auxiliary switch (Q2) has a control electrode, a working electrode and a reference electrode, wherein the reference electrode of the second auxiliary switch (Q2) is coupled to the first input connection (E1), wherein the control electrode of the second auxiliary switch (Q2) is coupled via a non-reactive resistor (R5) to the second input connection (E2).

8. Buck converter according to Claim 7,
**characterized**
**in that** the working electrode of the second auxiliary switch (Q2) is coupled via a non-reactive resistor (R8) to the working electrode of the first auxiliary switch (Q3).

9. Buck converter according to one of the preceding claims,
**characterized**
**in that** the Buck converter furthermore comprises:
a second auxiliary winding (TR1, w2), which is coupled to the Buck inductor and has a first connection which is coupled to the first input connection (E1) and a second connection which is coupled to the control electrode of the second auxiliary switch (Q2).

10. Buck converter according to Claim 9,
**characterized**
**in that** a non-reactive resistor (R7), preferably a non-reactive resistor (R7) connected in series with a diode (D1), is coupled between the second connection of the second auxiliary winding (TR1, w2) and the control electrode of the second auxiliary switch (Q2).

11. Buck converter according to one of Claims 9 or 10,
**characterized**
**in that** the second auxiliary winding (TR1, w2) is coupled to the Buck inductor (TR1, w1) such that, during the demagnetization phase of the Buck inductor (TR1, w1), a current is provided to the control electrode of the second auxiliary switch (Q2) such that the second auxiliary switch (Q2) is switched off.

12. Buck converter according to one of the preceding claims,
**characterized**
**in that** at least one capacitor (C2; C3) is coupled between the first output connection (A1) and the second output connection (A2).

## Revendications

1. Convertisseur Buck destiné à mettre un courant à disposition d'au moins une DEL, comprenant
- une entrée dotée d'une première (E1) et d'une deuxième borne d'entrée (E2) destinées à connecter une source de tension continue ;
- une sortie dotée d'une première (A1) et d'une deuxième borne de sortie (A2) destinées à connecter ladite au moins une DEL ; et
- une diode Buck (D2), une inductance Buck (TR1, w1) et un interrupteur principal Buck (Q1) qui comporte une électrode de commande, une électrode de travail et une électrode de référence ;
la diode Buck (D2) et l'interrupteur principal Buck (Q1) étant couplés en série entre la première (E1) et la deuxième borne d'entrée (E2) ;
la première borne de l'inductance Buck (TR1, w1) étant couplée avec la première borne d'entrée (E1) ;
le convertisseur Buck comprenant en outre :
un premier enroulement auxiliaire (TR1, w3) couplé avec l'inductance Buck (TR1, w1), qui comporte une première borne qui est couplée avec la deuxième borne d'entrée (E2) et une deuxième borne qui est couplée avec l'électrode de commande de l'interrupteur principal Buck (Q1), le premier enroulement auxiliaire (TR1, w3) étant couplé avec l'inductance Buck (TR1, w1) de telle façon qu'un courant est mis à disposition de l'électrode de commande de l'interrupteur principal Buck (Q1) par l'intermédiaire du premier enroulement (TR1, w3) lorsqu'un courant circule à travers l'interrupteur principal Buck (Q1),
**caractérisé en ce que**
le point de connexion (VP1) entre la diode Buck (D2) et l'interrupteur principal Buck (Q1) est couplé avec la deuxième borne de sortie (A2) ;
la deuxième borne de l'inductance Buck (TR1, w1) étant couplée avec la première borne de sortie (A1).

2. Convertisseur Buck selon la revendication 1,
**caractérisé en ce que**
le convertisseur Buck comprend en outre :
une résistance de mesure du courant (R6) qui est couplée en série avec l'interrupteur principal Buck (Q1), en particulier entre le point de connexion (VP1) défini par la diode Buck (D2) et l'interrupteur principale Buck (Q1) et la deuxième borne d'entrée (E2), ainsi que un premier interrupteur auxiliaire (Q3) destiné à débrancher l'interrupteur principal Buck (Q1), le premier interrupteur auxiliaire (Q3) comportant une électrode de commande, une électrode de travail et une électrode de référence, l'électrode de référence du premier interrupteur auxiliaire (Q3) étant couplée avec la deuxième borne d'entrée (E2) et l'électrode de commande du premier interrupteur auxiliaire (Q3) étant couplée avec la résistance de mesure du courant (R6).

3. Convertisseur Buck selon la revendication 2,
**caractérisé en ce que**
le convertisseur Buck comprend en outre un élément de temporisation (C1, R3) qui est couplé entre la résistance de mesure du courant et l'électrode de commande du premier interrupteur auxiliaire (Q3).

4. Convertisseur Buck selon l'une des revendications précédentes,
**caractérisé en ce que**
une première résistance ohmique (R1) est couplée entre la deuxième borne du premier enroulement auxiliaire (TR1, w3) et l'électrode de commande de l'interrupteur principal Buck (Q1).

5. Convertisseur Buck selon la revendication 4,
**caractérisé en ce que**
le point de connexion entre la première résistance ohmique (R1) et l'électrode de commande de l'interrupteur principal Buck (Q1) est couplé avec la deuxième borne d'entrée (E2) par l'intermédiaire d'une deuxième résistance ohmique (R2).

6. Convertisseur Buck selon l'une des revendications 2 à 5,
**caractérisé en ce que**
l'électrode de commande de l'interrupteur principal Buck (Q1) est couplée avec l'électrode de travail du premier interrupteur auxiliaire (Q3).

7. Convertisseur Buck selon l'une des revendications précédentes,
**caractérisé en ce que**
le convertisseur Buck comprend en outre :
un deuxième interrupteur auxiliaire (Q2) destiné à démarrer le convertisseur Buck, le deuxième interrupteur auxiliaire (Q2) comportant une électrode de commande, une électrode de travail et une électrode de référence, l'électrode de référence du deuxième interrupteur auxiliaire (Q2) étant couplée avec la première borne d'entrée (E1), l'électrode de commande du deuxième interrupteur auxiliaire (Q2) étant couplé avec la deuxième borne d'entrée (E2) par l'intermédiaire d'une résistance ohmique (R5).

8. Convertisseur Buck selon la revendication 7,
**caractérisé en ce que**
l'électrode de travail du deuxième interrupteur auxiliaire (Q2) est couplée avec l'électrode de travail du premier interrupteur auxiliaire (Q3) par l'intermédiaire d'une résistance ohmique (R8).

9. Convertisseur Buck selon l'une des revendications précédentes,
**caractérisé en ce que**
le convertisseur Buck comprend en outre :
un deuxième enroulement auxiliaire (TR1, w2) couplé avec l'inductance Buck, qui comporte une première borne qui est couplée avec la première borne d'entrée (E1) et une deuxième borne qui est couplée avec l'électrode de commande du deuxième interrupteur auxiliaire (Q2).

10. Convertisseur Buck selon la revendication 9,
**caractérisé en ce que**
une résistance ohmique (R7), de préférence le montage en série d'une résistance ohmique (R7) et d'une diode (D1) est couplé entre la deuxième borne du deuxième enroulement auxiliaire (TR1, w2) et l'électrode de commande du deuxième interrupteur auxiliaire (Q2).

11. Convertisseur Buck selon l'une des revendications 9 ou 10,
**caractérisé en ce que**
le deuxième enroulement auxiliaire (TR1, w2) est couplé avec l'inductance Buck (TR1, w1) de telle façon qu'un courant est mis à disposition de l'électrode de commande du deuxième interrupteur auxiliaire (Q2) pendant la phase de démagnétisation de l'inductance Buck (TR1, w1), de telle sorte que le deuxième interrupteur auxiliaire (Q2) sera bloqué.

12. Convertisseur Buck selon l'une des revendications précédentes,
**caractérisé en ce que**
au moins un condensateur (C2 ; C3) est couplé entre la première (A1) et la deuxième borne de sortie (A2).
